# FASCICULE DE BREVET EUROPEEN

(11) **EP 2 507 040 B1**
(45) Date de publication et mention de la délivrance du brevet: **28.10.2015**
(21) Numéro de dépôt: 10787689.8
(22) Date de dépôt: 25.11.2010
(51) Int. Cl.: B29C 70/24, B29C 70/34, F16C 7/00

(54) **PROCEDE DE FABRICATION D'UNE BIELLE EN MATERIAU COMPOSITE INTEGRANT UNE CHAPE RENFORCEE**
VERFAHREN ZUR HERSTELLUNG EINER VERBINDUNGSSTREBE AUS EINEM VERBUNDSTOFF MIT EINER VERSTÄRKTEN GABEL
METHOD FOR MAKING A CONNECTING ROD MADE OF A COMPOSITE MATERIAL COMPRISING A REINFORCED YOKE

(30) Priorité: 30.11.2009 FR 0905745
(43) Date de publication de la demande: 10.10.2012
(73) Titulaire: Messier-Bugatti-Dowty, 78140 Vélizy-Villacoublay (FR)
(72) Inventeur: MASSON, Richard, 78350 Les Loges en Josas (FR); DUNLEAVY, Patrick, F-91120 Palaiseau (FR)
(74) Mandataire: Beaudouin-Lafon, Emmanuel
(86) Numéro de dépôt international: PCT/EP2010/007141
(87) Numéro de publication internationale: WO 2011/063953

(56) Documents cités:
- WO-A2-2009/038301
- FR-A1- 2 893 532
- US-A- 4 704 918
- US-A- 5 882 756
- REFEREX, 2002, pages 220-223, XP040425194,

## Description

L'invention concerne un procédé de fabrication d'une bielle en matériau composite comportant un corps principal dont une partie telle qu'une extrémité est renforcée pour supporter une concentration de contrainte mécanique.

### ARRIERE PLAN DE L'INVENTION

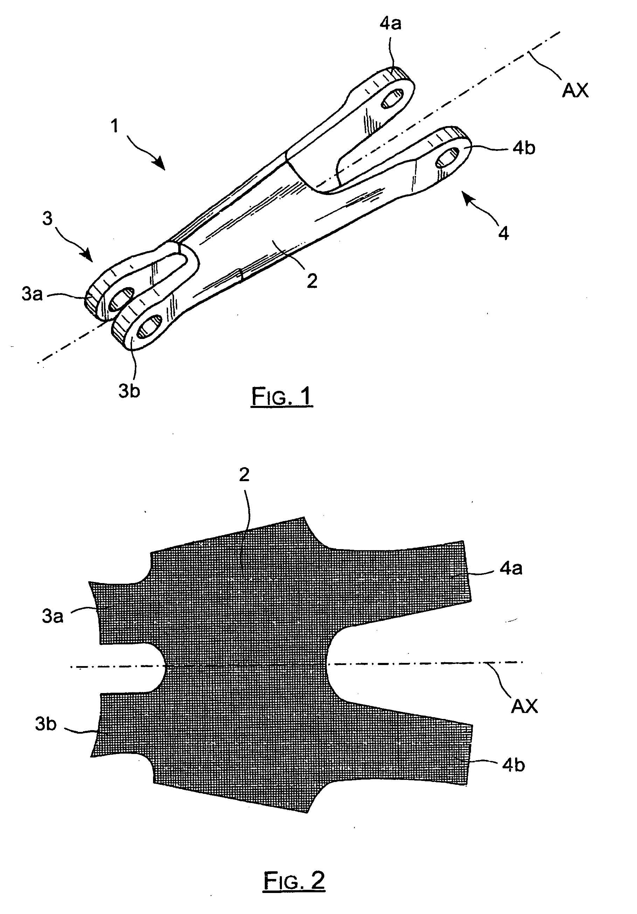

Une telle bielle, représentée dans la figure 1 en y étant repérée par 1, comprend un corps principal creux 2 généralement tubulaire prolongé à chacune de ses extrémité par une chape double, ces chapes doubles étant ici repérées par 3 et 4.

Chaque chape double 3, 4 comprend deux ailes, repérées par 3a, 3b, 4a et 4b, qui sont toutes constituées d'une épaisseur de matériau composite supérieure à l'épaisseur nominale de matériau composite dans le reste de la bielle. Les deux ailes de chaque chape s'étendent parallèlement à la direction générale AX du corps principal creux, et chaque aile comprend un alésage dans lequel est monté un palier métallique.

Selon un procédé connu du document de brevet FR2893532, cette bielle est fabriquée à partir d'une pièce de tissu de fibres renforçantes découpée selon une forme représentée en figure 2. Cette forme comprend une portion centrale pour le corps principal creux 2, et quatre extensions correspondant chacune à une aile de chape double.

Le tissu utilisé est un tissu de fibres de carbone d'épaisseur constante, de type 2,5D, c'est-à-dire comprenant plusieurs couches de fibres tissées superposées, et qui sont liées les unes aux autres par des fibres de liaison encore appelées fibres transverses.

La fabrication de cette bielle consiste à replier la pièce de tissu de la figure 2 en l'appliquant sur un mandrin ou analogue, puis à injecter de la résine dans le tissu de fibres renforçantes et à cuire l'ensemble pour polymériser cette résine.

L'augmentation d'épaisseur des chapes est réalisée préalablement à la mise en forme du tissu, en coupant les fibres de liaison des couches de base du tissu 2,5D au niveau des chapes, de manière à désolidariser localement ces couches de base les unes des autres.

Des couches intercalaires sont alors insérées localement entre les couches de base désolidarisées, ce qui permet d'augmenter l'épaisseur localement. Après ajout des couches intercalaires, des fibres dites transverses sont passées à travers l'ensemble pour solidariser toutes les couches les unes aux autres.

Les ailes de chaque chape ont ainsi une épaisseur significativement supérieure à l'épaisseur du reste de la bielle, de manière à accroître la résistance mécanique qu'oppose la chape aux efforts exercés sur celle-ci selon la direction AX. Ces efforts résultent de la charge normale de la bielle lorsque sa chape est montée sur un axe non représenté dans les figures.

En pratique, la valeur de surépaisseur pouvant être atteinte reste limitée du fait qu'il est difficile d'ajouter plus d'une couche intercalaire entre chaque couche du tissu 2,5D qui est utilisé. Cette limitation de la surépaisseur pouvant être réalisée se traduit par une limitation de la résistance mécanique de la chape, et donc de l'ensemble de la bielle.

### OBJET DE L'INVENTION

Le but de l'invention est de proposer une solution pour augmenter encore la résistance mécanique d'une partie de la bielle.

### RESUME DE L'INVENTION

A cet effet, l'invention a pour objet un procédé de fabrication d'une bielle en matériau composite comprenant une chape destinée à recevoir un axe mécanique, cette chape comprenant deux ailes parallèles s'étendant perpendiculairement à l'orientation de l'axe mécanique, comprenant les étapes de :
- fabriquer un mandrin formant un tout suffisamment rigide pour recevoir des couches de fibres ;
- appliquer sur ce mandrin des couches de base de fibres renforçantes constituant la bielle ainsi que des couches additionnelles intercalées entre les couches de base au niveau de la chape pour y constituer des surépaisseurs ;
- insérer au niveau de chaque aile de chape des picots traversant les couches intercalaires et les couches de base en s'étendant selon l'orientation de l'axe mécanique sur lequel cette chape est destinée à être montée ;
- injecter de la résine dans les couches de base et dans les couches intercalaires et polymériser cette résine.

Avec cette solution, il apparaît que les picots orientés parallèlement à l'axe mécanique sur le quel la chape est destinée à être montée augmentent la résistance mécanique de la chape à un effort orienté longitudinalement.

L'invention concerne également un procédé tel que défini ci-dessus, dans lequel les couches de base sont des couches de fibres renforçantes tressées autour du mandrin, et dans lequel chaque couche intercalaire est formée par un lien de fibres renforçantes bobiné autour du mandrin et de la ou des couches de bases qu'il porte.

L'invention concerne également un procédé tel que défini ci-dessus, dans lequel le lien utilisé pour les couches intercalaires est une bande de tissus de fibres renforçantes.

L'invention concerne également un procédé tel que défini ci-dessus, dans lequel les picots sont insérés en étant portés par un support vibrant.

L'invention concerne également un procédé tel que défini ci-dessus, dans lequel le support vibrant comprend une plaque de base dont une face porte des ergots, et dans lequel une entretoise en matériau compressible et ayant une épaisseur supérieure à la longueur de ces ergots est rapportée contre la face portant les ergots en étant partiellement traversée par ces ergots, et dans laquelle chaque picot est porté par le support vibrant en étant inséré dans l'entretoise en vis-à-vis d'un ergot correspondant.

### BREVE DESCRIPTION DES FIGURES

La figure 1 déjà décrite est une vue d'ensemble d'une bielle en matériau composite connue à deux chapes doubles ;
La figure 2 déjà décrite est une vue à plat de la pièce de tissu de fibres renforçantes utilisée pour fabriquer la bielle de la figure 1 selon un procédé connu ;
La figure 3 montre une chape d'une bielle obtenue avec le procédé selon l'invention dans une représentation en perspective et selon un plan de coupe passant par son axe longitudinal ;
La figure 4 montre une chape d'une bielle obtenue avec le procédé selon l'invention dans une représentation en vue latérale selon un plan de coupe passant par son axe longitudinal ;
La figure 5 est une vue en perspective d'un mandrin pouvant être utilisé pour fabriquer une bielle avec le procédé selon l'invention ;
La figure 6 est une vue en perspective montrant schématiquement une opération de dépôt d'une couche de fibres renforçantes tressée autour du mandrin de la figure 5 ;
La figure 7 est une vue en perspective montrant schématiquement une opération de dépôt d'une couche de fibres renforçantes bobinée autour d'un mandrin portant une couche de fibres renforçantes tressées ;
Les figures 8 à 14 illustrent différentes étapes d'une opération d'insertion de picots dans une aile de chape conformément à l'invention.

### DESCRIPTION DETAILLEE DE L'INVENTION

L'invention réside dans le constat selon lequel l'axe mécanique sur lequel la chape est montée exerce sur celle-ci des efforts orientés selon l'axe longitudinal de la bielle, mais qui donnent lieu dans les ailes de la chape à des contraintes orientées perpendiculairement à cette direction longitudinale, ce qui amorce la détérioration de la chape par délaminage lorsque l'ensemble est sous charge.

Selon l'invention, la résistance des ailes de chaque chape est augmentée en renforçant les liaisons solidarisant les unes aux autres les couches parallèle constituant chaque aile, au lieu d'accroître la surépaisseur constituant ces ailes.

Concrètement, lorsque la bielle est sous charge, elle est soumise à une sollicitation longitudinale qui se traduit dans le corps de bielle par une contrainte mécanique orientée principalement selon la direction longitudinale. Au niveau des chapes, les efforts qui sont transmis par chaque axe, se traduisent au contraire par des contraintes multidirectionnelles réparties de manière hétérogène dans chaque aile.

Ces contraintes multidirectionnelles tendent notamment à délaminer les couches constituant chaque aile de chape, de sorte que l'ajout de picots transversaux permet d'augmenter la cohésion de ces couches entre elles, et implique par là même une augmentation de la tenue mécanique, notamment selon la direction longitudinale.

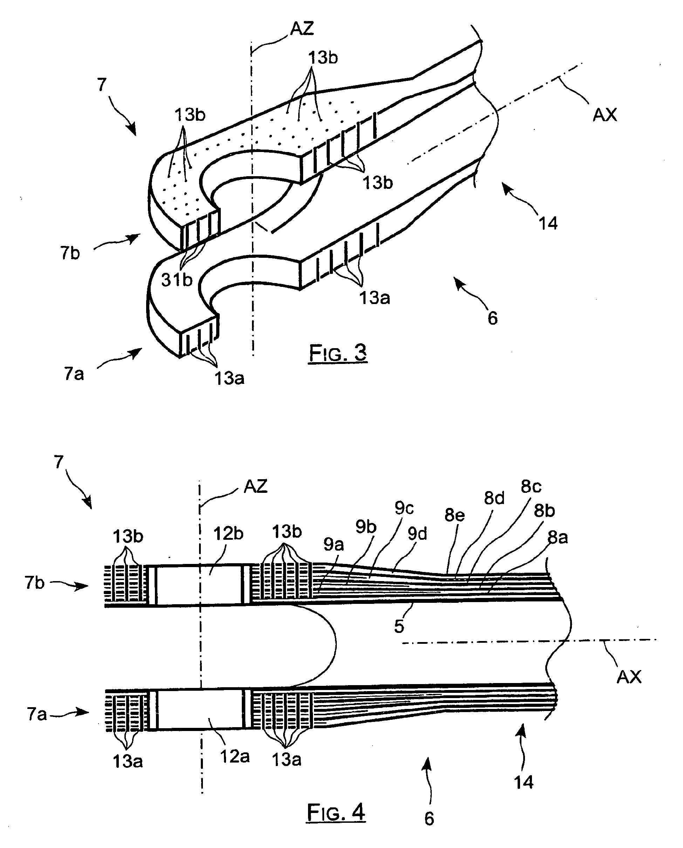

La bielle selon l'invention, qui apparaît dans les figures 3 et 4 en y étant repérée par 6 comprend une chape double 7 constituée de deux ailes 7a et 7b orientées parallèlement l'une à l'autre, en s'étendant selon la direction longitudinale de la bielle, représentée par l'axe AX.

Cette bielle est constituée d'un ensemble de couches de base de fibres renforçantes repérées par 8a à 8e qui entourent un mandrin 11 sous forme de manchon. En extrémité de cette bielle, c'est-à-dire dans la région 7 correspondant aux ailes 7a et 7b, des couches intercalaires additionnelles 9a à 9d ont été interposées localement, entre les couches de base consécutives 8a à 8e.

Chaque aile 7a, 7b est constituée d'une épaisseur de fibres renforçantes correspondant sensiblement au double de l'épaisseur nominale de fibres renforçantes constituant la bielle 6, notamment dans sa région centrale c'est-à-dire dans le corps tubulaire.

Chaque aile 7a, 7b comprend encore un alésage non repéré, dans lequel est engagée une bague métallique correspondante. Ces bagues 12a et 12b constituent des paliers alignés selon un axe AZ normal à l'axe AX, et ils entourent l'axe mécanique sur lequel la chape est destinée à être montée, pour répartir dans les ailes les efforts exercés par cet axe mécanique.

Les couches de fibres renforçantes en carbone 8a-8e et 9a-9d qui sont superposées pour constituer chaque aile 7a et 7b en s'étendant selon des plans normaux à l'axe AZ sont traversées par des picots en carbone qui s'étendent parallèlement à la direction AZ pour solidariser les unes aux autres ces différentes couches superposées.

Comme visible dans les figures, les picots traversant les couches de fibres de l'aile 7a sont repérés par 13a, et les picots traversant les couches de fibres de l'aile 7b sont repérés par 13b.

Ces picots 13a et 13b sont montés en étant insérés dans les couches de fibres renforçantes lorsqu'elles sont sèches, c'est-à-dire préalablement à l'injection de résine. L'insertion des picots dans une aile de chape est avantageusement assurée avec un support vibrant portant les picots à insérer, et qui est progressivement rapproché de la face externe de l'aile de chape dans laquelle les picots sont insérés, comme détaillé plus bas. Les picots peuvent aussi être insérés selon d'autres procédés connus, et répondant généralement à l'appellation "z-pinning". D'une manière générale, on prévoit une densité de picots de l'ordre de trois à cinq picots par centimètre carré.

Une fois que les picots 13a et 13b ont été insérés, l'ensemble constitué par le mandrin 11 avec les couches de base de fibres 8a-8e qu'il porte, les couches additionnelles 9a-9d intercalées entre ces couches de base au niveau des ailes 7a et 7b, et les picots 13a et 13b, est installé dans un moule. De la résine est alors injectée dans toutes les couches, et l'ensemble est chauffé de manière à polymériser cette résine.

Dans la pièce finie, la liaison entre les couches de base 8a-8e, et les couches intercalaires 9a-9d est assurée conjointement par la résine polymérisée et par les picots.

Les picots 13a et 13b s'opposent au délaminage des différentes couches de fibres renforçantes en apportant une résistance en traction selon la direction AZ, alors que la résine polymérisée transfère les efforts d'une couche à l'autre en offrant une résistance au cisaillement selon des directions parallèles à un plan normal à l'axe AZ.

La bielle qui est représentée aux figures 3 et 4 peut être fabriquée conformément au procédé décrit en relation avec les figures 1 et 2, c'est-à-dire en utilisant une pièce de tissu de fibres renforçantes en carbone, de type 2,5D.

Comme indiqué plus haut, les fibres transverses liant les couches de base de ce tissu sont coupées dans les régions correspondant aux ailes des chapes, et des couches intercalaires additionnelles sont interposées entre les couches de base désolidarisées, localement au niveau des ailes.

La pièce de tissu ainsi modifiée est ensuite installée sur un mandrin en vue de l'insertion des picots au niveau des ailes des chapes, après quoi l'ensemble est ensuite installé dans un moule pour injection de résine et polymérisation de cette résine.

Avantageusement, la bielle peut aussi être fabriquée selon un procédé dans lequel les couches de base qui la constituent, à savoir les couches 8a-8e sont réalisées par tressage autour du mandrin, et dans lequel les couches additionnelles intercalées au niveau de chaque aile de chape sont appliquées par bobinage de bandes de fibres renforçantes tissées.

Dans ce cas, les picots 13a et 13b sont appliqués localement au niveau des ailes de chapes, selon la direction AZ, pour lier les couches de base 8a-8e qui sont alors des couches tressées, aux couches intercalaires 9a-9d qui sont alors des couches bobinées.

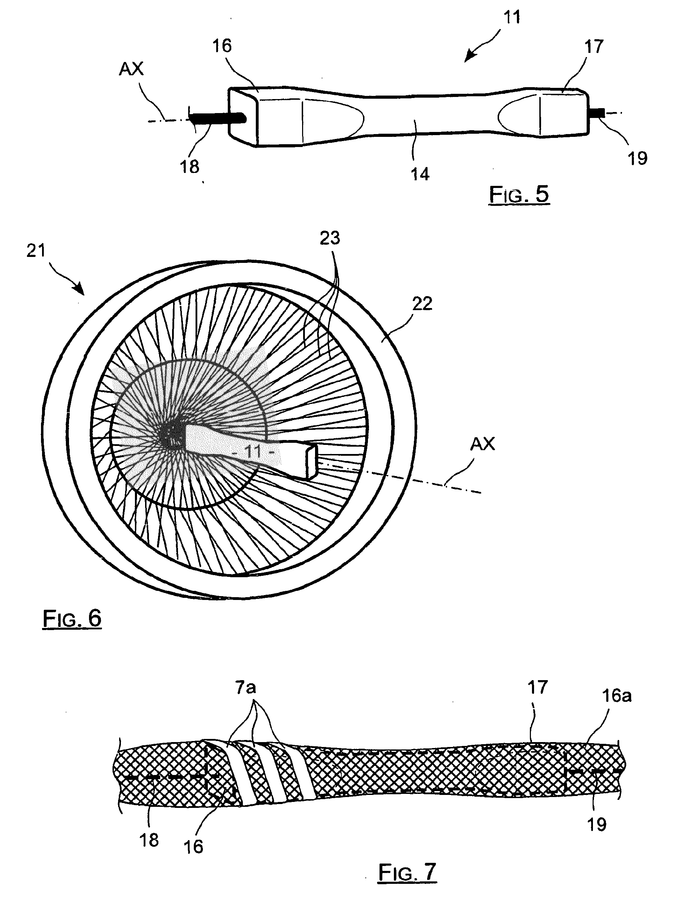

Comme visible dans la figure 5, le mandrin 11 s'étend selon l'axe longitudinal AX, en se présentant sous forme d'un manchon généralement creux ayant une forme généralement de révolution autour de cet axe. La section transversale du mandrin 11 est à peu près circulaire dans la région centrale 14, alors qu'au niveau de la première et de la seconde extrémité, repérées respectivement par 16 et 17, cette section a une forme sensiblement rectangulaire.

Deux tiges 18 et 19 sont rigidement solidarisées aux extrémités 16 et 17 du mandrin 11, en s'étendant selon la direction AX, pour permettre de manipuler le mandrin sans devoir le saisir par sa face externe.

Ce mandrin 11 qui sert à supporter les couches de fibres renforçantes et à donner la forme interne à la pièce finie, peut être fabriqué à partir de couches de tissu de fibres de carbone pré-imprégné, l'ensemble étant ensuite pré-polymérisé pour lui donner la rigidité mécanique requise.

Comme représenté en figure 6, une fois que le mandrin 11 est terminé, il est engagé dans une machine de tressage 21, de manière à tresser autour de celui-ci une première couche de base 8a de fibres renforçantes en carbone. Cette machine 21 comprend principalement un anneau 22 centré sur l'axe AX et portant une série de bobines de fibres de carbone 23.

Lorsque le mandrin 11 est déplacé le long de l'axe AX à travers l'anneau 22, l'ensemble étant actionné par des moyens pilotés et asservis, une chaussette de fibres de carbone se tisse autour de la face externe du mandrin 11. Comme visible dans la figure 7, la première couche de base 8a de fibres de carbone tressée entoure le mandrin 11 sur toute sa longueur, et dépasse au delà de ses extrémités 16 et 17.

Lorsque cette première couche tressée 8a a été déposée, une première bande 9a est bobinée autour de la première extrémité 16 du mandrin 11, par dessus cette première couche de base 8a, pour constituer une surépaisseur locale renforçant les ailes de la chape double 7.

La première extrémité de la bielle coïncide avec la première extrémité 16 du mandrin 11, la région centrale de la bielle coïncide avec la région centrale 14 du mandrin 11, et la seconde extrémité de la bielle coïncide avec la seconde extrémité 17 du mandrin 11.

La bande bobinée 9a est disposée selon une forme générale d'hélicoïde à base sensiblement rectangulaire, conformément à la section de l'extrémité 16 du mandrin 11 qu'elle entoure. Dans la figure 7, la bande 9a entoure l'extrémité 16 sur trois tours d'hélicoïde qui sont espacés les uns des autres.

D'une part, les spires d'hélicoïdes peuvent aussi être jointives au lieu d'être espacées les unes des autres, et d'autre part, plusieurs couches de bandes peuvent être bobinées successivement autour de cette première extrémité, de manière à augmenter la surépaisseur ainsi introduite entre deux couches tressées.

L'application de cette bande peut être réalisée de façon manuelle, automatique ou semi-automatique. Par exemple, ce bobinage peut être réalisé avec une machine à bobiner comprenant un anneau entourant le mandrin 11 en étant apte à tourner autour de celui-ci, et portant une bobine de bande de fibres renforçantes. La mise en rotation de l'anneau et l'avance du mandrin le long de l'axe AX permettent de réaliser un bobinage ayant un pas ajustable au besoin.

Une fois que cette première bande 9a a été bobinée autour de la première extrémité, l'ensemble du mandrin 11 avec la première couche de base tressée 8a et la première bande bobinée 9a est à nouveau présenté dans l'anneau 22, de manière à tresser une autre couche de base 8b de fibres renforçantes autour de cet ensemble.

Une fois que cette deuxième couche de base 8b a été tressée, une deuxième bande est bobinée autour de la première extrémité 16, et différentes opérations d'application de couches tressées et de bandes bobinées sont réalisées successivement, jusqu'à application de la dernière couche de base tressée.

Lorsque toutes les couches ont été appliquées, les picots sont insérés au niveau de chaque aile de chape, pour accroître la résistance mécanique des liaisons liant les unes aux autres les couches de base tressées et les couches intercalaires bobinées.

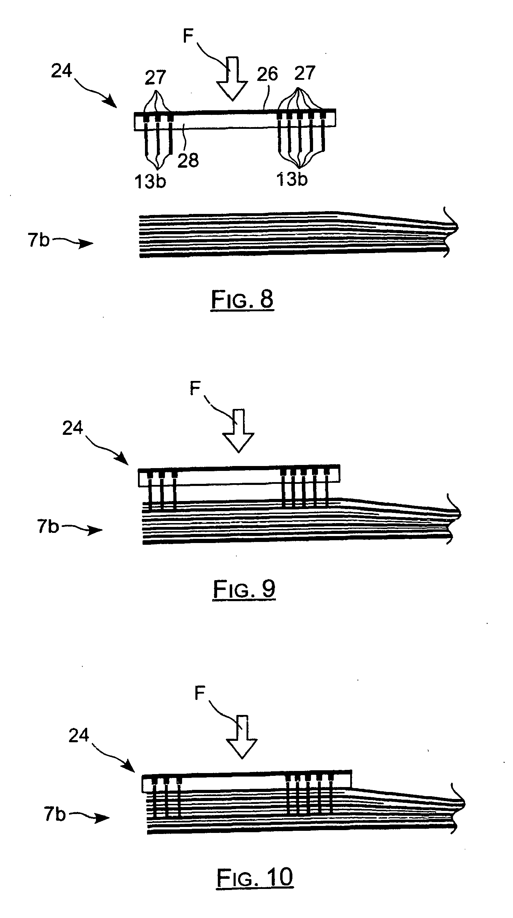

Comme représenté schématiquement dans les figures 8 à 14, l'insertion des picots dans l'aile de chape 7b est assurée avec un support vibrant qui porte les picots 13b et qui est abaissé vers la face externe de l'aile 7b. L'insertion des picots dans l'autre aile 7a est assurée de manière analogue.

Le support vibrant 24 comporte une plaque de base 26 équipée d'un ensemble d'ergots ou analogues 27 dépassant de l'une de ses faces en étant chacun situé à un emplacement d'un picot à insérer.

Une entretoise de polypropylène, polystyrène ou analogue 28, ayant une épaisseur supérieure à la longueur de ces ergots 27, est appliquée sur la face portant ces ergots, de manière à être en appui contre la face correspondante de la plaque de base 26 et à être partiellement traversée par les ergots 27.

Chaque picot 13b à insérer dans l'aile de chape 7b est d'abord "planté" dans la face libre de l'entretoise 28, en vis-à-vis d'un ergot 27 correspondant, de manière à avoir son extrémité en appui contre l'extrémité de cet ergot 27. D'une manière générale, l'entretoise 28 est fabriquée dans un matériau suffisamment souple pour être traversé d'une part par les ergots 27 et d'autre part par les picots 13b.

A ce stade, et comme représenté schématiquement en figure 8, le support vibrant 24 qui porte les différents picots 13b non encore insérés, est positionné au dessus de la face externe de l'aile de chape 7b. Les moyens de mise en vibration de ce support vibrant sont alors activés, en même temps que l'ensemble est abaissé vers l'aile de chape, en étant soumis à un effort repéré par F dans les figures.

Au fur et à mesure que le support vibrant s'abaisse, les picots 13b qu'il porte s'engagent à travers les couches de base et les couches intercalaires constituant l'aile 7b, comme illustré sur la figure 9, jusqu'à ce que l'entretoise 28 vienne au contact de la face externe de cette aile 7b, ce qui correspond à la situation de la figure 10.

Comme l'entretoise 28 est fabriquée dans un matériau souple et/ou compressible, le mouvement de descente du support vibrant 24 peut néanmoins continuer, sous l'effet de l'effort F, ce qui comprime l'entretoise 28, réduisant par là même son épaisseur.

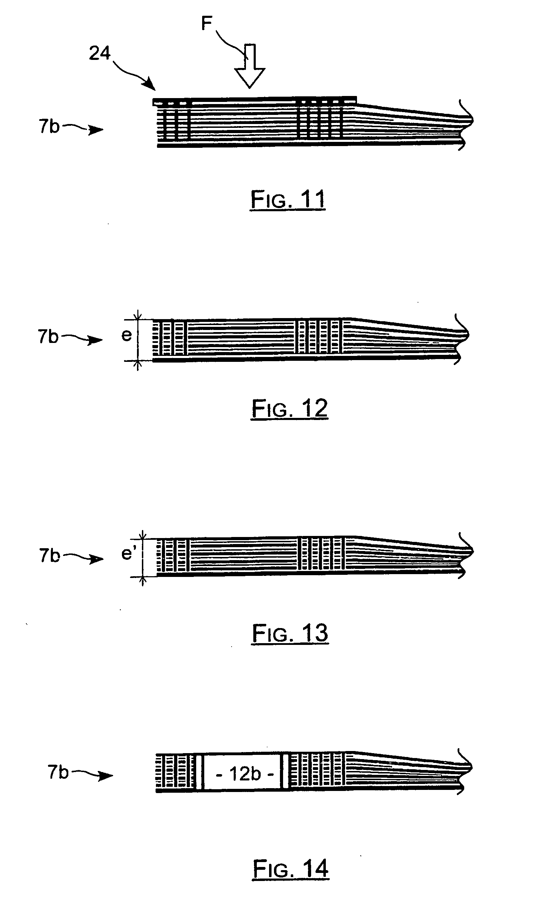

A ce stade, qui est représenté schématiquement dans la figure 11, les ergots 27 qui sont rigides, pénètrent partiellement à travers les premières couches de fibre via la face externe de l'aile 7b. Ainsi, les extrémités des picots 13b sont noyées dans l'aile 7b, au lieu de dépasser de sa face externe.

Autrement dit, la mise en oeuvre d'un support 24 vibrant équipé d'une entretoise 28 en matériau compressible permet de noyer complètement les picots 13b dans l'épaisseur de l'aile de chape 7b, comme représenté schématiquement sur la figure 12.

Le fait que les picots 13b soient noyés dans l'épaisseur de l'aile permet de faciliter l'installation de l'ensemble formé par le mandrin et les couches qu'il porte dans le moule en vue d'injecter et de polymériser la résine pour lier l'ensemble.

En effet, en pratique, les différentes couches de fibres renforçantes constituant la bielle présentent une certaine compressibilité selon la direction radiale, et ces couches sont comprimées lors de l'installation dans le moule, ce qui permet encore d'accroître la densité de fibres dans l'ensemble de la pièce.

Grâce au fait que les picots 13b sont complètement noyés dans l'épaisseur des couches de fibres renforçantes, ils ne constituent pas un obstacle à la compression radiale de ces couches de fibres qui intervient lorsque l'ensemble est installé dans le moule d'injection.

Comme représenté schématiquement dans les figures 12 et 13, l'aile de chape 7b a une épaisseur notée e avant installation dans le moule, et son épaisseur diminue pour prendre la valeur e' après installation dans le moule.

Une fois que la résine a été injectée et polymérisée, la chape double est usinée, et l'alésage peut être réalisé dans chaque aile de chape, pour y monter la bague correspondante, comme illustré schématiquement dans la figure 14.

L'usinage de la chape double 7 peut être assuré par exemple par passage d'une fraise scie au niveau de la première extrémité de la pièce brute, selon un plan contenant l'axe AX et orienté selon une direction normale à l'axe AZ.

Le passage de cette fraise scie permet de former une rainure qui sépare l'une de l'autre les deux ailes ou branches 7a et 7b de la chape double 7, qui sont ainsi espacées d'une distance correspondant à l'épaisseur de la fraise scie.

Dans l'exemple des figures 5 à 7, le matériau qui est bobiné autour de la première extrémité est un lien de fibres renforçantes se présentant sous forme d'une bande de fibres tissées. Il est également possible de bobiner directement de la fibre renforçante, ou encore un ruban, ou bien une mèche ou un toron de fibres renforçantes. D'une manière plus générale, il s'agit de bobiner un lien fabriqué en fibres renforçantes qui sont avantageusement des fibres de même nature que les fibres des couches de base.

Par ailleurs, dans l'exemple des figures, le procédé est utilisé pour renforcer une extrémité de bielle. Mais l'invention peut trouver d'autres applications : il est possible de bobiner une ou des bandes par exemple dans une région centrale du corps de bielle et de les renforcer au moyen de picots.

## Revendications

1. Procédé de fabrication d'une bielle (6) en matériau composite comprenant une chape (7) destinée à recevoir un axe mécanique, cette chape (7) comprenant deux ailes (7a, 7b) parallèles s'étendant perpendiculairement à l'orientation (AZ) de l'axe mécanique, comprenant les étapes de :
- fabriquer un mandrin (11) formant un tout suffisamment rigide pour recevoir des couches de fibres (8a-8e, 9a-9d) ;
- appliquer sur ce mandrin (11) des couches de base (8a-8e) de fibres renforçantes constituant la bielle (6) ainsi que des couches additionnelles (9a-9d) intercalées entre les couches de base (8a-8e) au niveau de la chape (7, 7a, 7b) pour y constituer des surépaisseurs ;
- insérer au niveau de chaque aile (7a, 7b) de chape (7) des picots (13a, 13b) traversant les couches intercalaires (9a-9d) et les couches de base (8a-8e) en s'étendant selon l'orientation (AZ) de l'axe mécanique sur lequel cette chape (7) est destinée à être montée ;
- injecter de la résine dans les couches de base (8a-8e) et dans les couches intercalaires (9a-9d) et polymériser cette résine.

2. Procédé selon la revendication 1, dans lequel les couches de base (8a-8e) sont des couches de fibres renforçantes tressées autour du mandrin (11), et dans lequel chaque couche intercalaire (9a-9b) est formée par un lien de fibres renforçantes bobiné autour du mandrin (11) et de la ou des couches de bases (8a-8b) qu'il porte.

3. Procédé selon la revendication 2, dans lequel le lien utilisé pour les couches intercalaires (9a-9b) est une bande de tissus de fibres renforçantes.

4. Procédé selon l'une des revendications précédentes, dans lequel les picots (13a, 13b) sont
insérés en au moyen d'un support vibrant (24).

5. Procédé selon la revendication 4, dans lequel le support vibrant (24) comprend une plaque de base (26) dont une face porte des ergots (27), et dans lequel une entretoise (28) en matériau compressible et ayant une épaisseur supérieure à la longueur de ces ergots (27) est rapportée contre la face portant les ergots (27) en étant partiellement traversée par ces ergots (27), et dans laquelle chaque picot est porté par le support vibrant (24) en étant inséré dans l'entretoise (26) en vis-à-vis d'un ergot (27) correspondant.

## Patentansprüche

1. Verfahren zum Herstellen einer Stange (6) aus Verbundwerkstoff, umfassend einen Gabelkopf (7), der dazu bestimmt ist, eine mechanische Achse aufzunehmen, wobei dieser Gabelkopf (7) zwei parallele Schenkel (7a, 7b) umfasst, die sich senkrecht zur Ausrichtung (AZ) der mechanischen Achse erstrecken, umfassend die Schritte:
- Herstellen eines Dorns (11), der eine Einheit bildet, die ausreichend steif ist, um Faserschichten (8a-8e, 9a-9d) aufzunehmen,
- Aufbringen auf diesen Dorn (11) von Basisschichten (8a-8e) aus verstärkenden Fasern, die die Stange (6) bilden, sowie von zusätzlichen Schichten (9a-9d), die im Bereich des Gabelkopfes (7, 7a, 7b) zwischen die Basisschichten (8a-8e) eingefügt werden, um dort Überdicken zu bilden,
- Einfügen im Bereich jedes Schenkels (7a, 7b) des Gabelkopfes (7) von Stiften (13a, 13b), die die Zwischenschichten (9a-9d) und die Basisschichten (8a-8e) durchsetzen, indem sie sich entsprechend der Ausrichtung (AZ) der mechanischen Achse erstrecken, auf der dieser Gabelkopf (7) montiert werden soll,
- Einspritzen von Harz in die Basisschichten (8a-8e) und in die Zwischenschichten (9a-9d) und Polymerisieren dieses Harzes.

2. Verfahren nach Anspruch 1, wobei die Basisschichten (8a-8e) um den Dorn (11) geflochtene Schichten aus verstärkenden Fasern sind, und wobei jede Zwischenschicht (9a-9d) aus einem Band aus verstärkenden Fasern gebildet ist, das um den Dorn (11) und die Basisschicht oder Basisschichten (8a-8b), die erträgt, gewickelt ist.

3. Verfahren nach Anspruch 2, wobei das für die Zwischenschichten (9a-9b) verwendete Band eine Gewebebahn aus verstärkenden Fasern ist.

4. Verfahren nach einem der vorhergehenden Ansprüche, wobei die Stifte (13a, 13b) mittels eines schwingenden Trägers (24) eingefügt werden.

5. Verfahren nach Anspruch 4, wobei der schwingende Träger (24) eine Basisplatte (26) umfasst, von der eine Seite Nasen (27) trägt, und wobei eine Strebe (28) aus komprimierbarem Material und mit einer Dicke, die größer als die Länge dieser Nasen (27) ist, an der die Nasen (27) tragenden Fläche angebracht ist, indem er teilweise von diesen Zapfen (27) durchsetzt wird, und wobei jeder Stift von dem schwingenden Träger (24) getragen wird, während er in der Strebe (26) gegenüber einer entsprechenden Nase (27) eingefügt ist.

## Claims

1. A method for fabrication of a composite material connecting rod (6) comprising a yoke (7) adapted to receive a mechanical shaft, this yoke (7) comprising two parallel arms (7a, 7b) perpendicular to the orientation (AZ) of the mechanical shaft, the method comprising the steps of:
- fabricating a mandrel (11) forming a whole sufficiently rigid to receive layers of fibers (8a-8e, 9a-9d);
- applying to this mandrel (11) base layers (8a-8e) of reinforcing fibers constituting the connecting rod (6) and additional layers (9a-9d) interleaved between the base layers (8a-8e) at the level of the yoke (7, 7a, 7b) to constitute increased thicknesses there;
- at the level of each arm (7a, 7b) of the yoke (7), inserting lugs (13a, 13b) passing through the interleaved layers (9a-9d) and the base layers (8a-8e) according to the orientation (AZ) of the mechanical shaft on which this yoke (7) is to be mounted;
- injecting resin into the base layers (8a-8e) and into the interleaved layers (9a-9d) and polymerizing that resin.

2. The method claimed in claim 1, wherein the base layers (8a-8e) are layers of reinforcing fibers braided around the mandrel (11) and wherein each interleaved layer (9a-9b) is formed by a reinforcing fiber binding wound around the mandrel (11) and the base layer or layers (8a-8b) that it carries.

3. The method claimed in claim 2, wherein the binding used for the interleaved layers (9a-9b) is a reinforcing fiber tissue tape.

4. The method claimed in any one of the preceding claims, wherein the lugs (13a, 13b) that are inserted are carried by a vibrating support (24).

5. The method claimed in claim 4, wherein the vibrating support (24) comprises a base plate (26) one face of which carries studs (27) and wherein a compressible material spacer (28) having a thickness greater than the length of these studs (27) is attached against the face carrying the studs (27), having these studs (27) pass partly through it, and wherein each lug is carried by the vibrating support (24), being inserted in the spacer (26) facing a corresponding stud (27).
